# EUROPEAN PATENT SPECIFICATION

(11) **EP 1 112 665 B1**
(45) Date of publication and mention of the grant of the patent: **12.12.2007**
(21) Application number: 99968757.7
(22) Date of filing: 06.09.1999
(51) Int. Cl.: H04Q 7/22

(54) **PROCEDURE TO OBTAIN A COMMUNICATION ROUTE BETWEEN A TRANSMITTING COMPUTER AND A MOBILE GPRS-NODE VIA GGSN**
VERFAHREN ZUR GEWINNUNG EINES KOMMUNIKATIONSLEITWEGES ZWISCHEN EINEM SENDENDEN RECHNER UND EINEM MOBILEN GPRS-KNOTEN ÜBER EINEN GGSN-KNOTEN
PROCEDURE D'OBTENTION D'UNE VOIE DE COMMUNICATION ENTRE UN ORDINATEUR EMETTEUR ET UN MOBILE A NOEUD GPRS VIA UN NOEUD GGSN

(30) Priority: 09.09.1998 SE 9803045
(43) Date of publication of application: 04.07.2001
(73) Proprietor: Telia AB (publ), 123 86 Farsta (SE)
(72) Inventor: MALMKVIST, Jonas, S-142 62 Trangsund (SE)
(74) Representative: Hopfgarten, Nils
(86) International application number: PCT/SE1999/001547
(87) International publication number: WO 2000/014981

(56) References cited:
- EP-A2- 0 859 531
- WO-A1-97/48246
- WO-A2-98/59468
- US-A- 5 325 362
- GöTZ BRASCHE ET AL.: 'Concepts, Services and Protocols of the New GSM Phase 2+ General Packet Radio Service' IEEE COMMUNICATIONS MAGAZINE vol. 35, 1997, pages 94 - 104, XP000704443

## Description

### TECHNICAL FIELD

The present invention relates to a method for obtaining a communication route for IP-packets between a transmitting computer and a mobile GPRS-node via GGSN (Gateway GPRS Support Node) in a digital communication network.

### PRIOR ART

GPRS is a new telecommunications service which is especially adapted to digital cellular networks (GSM, DECT, PCS). GPRS makes use of the packet radio principle and can be used to transfer data via for instance the protocols IP and X.25 from/to a GPRS-terminal and from/to other GPRS-terminals and/or external packet data networks. GPRS is standardised in ETSI (European Telecommunication Standardisation Institute). GPRS makes use of a packet data technique to transmit high speed data and low speed data in an efficient way over GSM radio networks. GPRS optimises the use of network resources and radio resources. A strict separation of the radio subsystems and the network subsystems is obtained which results in that the network subsystems can be reused by other radio access technologies. GPRS does not require changes in the installed MSC base stations.

GPRS consequently is a packed switched data service which gives a mobile high speed transmission of data with efficient use of the existing bandwidth. This is a new technology in the field of GSM telephony which in optimal cases can cope with transmission rates up to 200 kb/s (as compared with 9,6 kb/s which GSM can cope with today). Data transmission via GSM can be realised in two different ways: circuit switched as in the voice transmissions of today (HSCSD) or packet switched as in GPRS.

WO 9748246 A1 discloses a method for providing wireless communication stations with dynamically assigned addresses, which provide a temporary address to route data to the wireless station.

GÖTZ BRASCHE et. al.: "Concepts, Services and Protocols of the New GSM Phase 2+ General Packet Radio Service" IEEE Communications Magazine vol. 35, 1997, pages 94-104, XP000704443, describes the General Packet Radio Service (GPRS). It is disclosed that a SGSN encapsulates the incoming packets and routes them to the appropriate GGSN.

EP-A2-0 859 531 discloses a method for providing a unique temporary identification of mobile stations.

US-A-5 325 362 describes a scalable intra-domain tunnelling mobile-IP scheme.

### TECHNICAL PROBLEM

GPRS (General Packet Radio Service) gives a computer in global Internet the possibility to address a mobile GPRS-node with a static IP-address. The use of static IP-addresses makes it possible for a computer in global Internet to initiate a session. By standard IP-routing the IP-packets which are addressed to the static IP-address of the mobile GPRS-node to be routed to the GGSN (Gateway GPRS Support Node) which has the static IP-address in its address space. From GGSN then the IP-packets are tunnelled by GTP to the SGSN (Serving GPRS Support Node), serving the mobile GPRS-node: after that the IP-packets are transmitted to the mobile GPRS-node.
This routing, however, has a number of disadvantages which the present invention can eliminate. The invention gives an optimal routing, i.e. IP-packets which are transmitted from a computer in the global Internet will be tunnelled by GTP in optimal route through GPRS backbone. The invention also solves the problems which can arise with bottle-necks both in Internet and GPRS Backbone when all traffic addressed to a node is forwarded through the same point (GGSN).

### TECHNICAL SOLUTION

The technical solution and the present invention is described in what is stated in claim 1. Several embodiments of the present invention emerge from the dependent claims.

### ADVANTAGES

By the present invention the public telecommunications network will be improved.

The invention is intended to be used in connection with GPRS and will by that be usable for both GSM and future mobile telephone systems as well as Internet.

The invention results in a better utilisation of existing network resources and by that more stable transmission times between transmitting and receiving units by a more optimal routing in the Internet. Further the invention aims at optimising the route through GPRS-backbone. The invention also gives the system better performance and a more stable performance.

### DESCRIPTION OF FIGURES

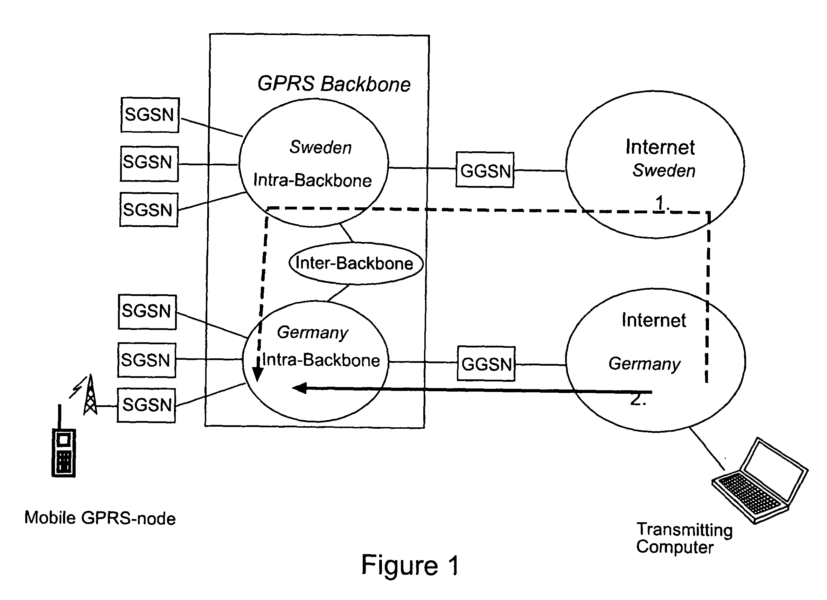

Figure 1 shows a schematic drawing of the system solution according to the invention.

### DESCRIPTION

A list of the used abbreviations is shown below to facilitate the understanding of the invention.
- BSS: Base Sub System
- CN: Core Network
- ETSI: European Telecommunication Standardisation Institute
- GGSN: Gateway GPRS Support Node
- GPRS: General Packet Radio Service
- GTP: GPRS Tunnelling Protocol
- GSM: Global System for Mobile Communication
- HLR: Home Location Register
- IP: Internet Protocol
- MS: Mobile Station
- MSC: Mobile Services Switching Centre
- PLMN: Public Land Mobile Network
- SGSN: Service GPRS Support Node

Figure 1 describes a system, where a transmitting computer in global Internet transmits IP-packets to a mobile GPRS-node which is in a GPRS-network. Reference designation 1 shows the route according to known technology, and reference designation 2 shows the route according to the invention.

GPRS introduces two new network nodes in the PLMN of the GSM. It is the Serving GPRS Support Node (SGSN), which is on the same hierarchical level as MSC and which checks the individual MSs as to position and performs security functions and access control. SGSN can be connected to the base stations by Frame Relay.
Gateway GSN (GGSN) gives possibility to co-operate with external packet switched networks and is connected with SGSNs via IP-based GPRS backbone network. HLR is equipped with GPRS subscriber information and SMS-MSCs are upgraded to support SMS transmission via SGSN.
The security functionality of GPRSs is equivalent to the existing GSM. SGSN executes authentication and coding procedures based on the same algorithms, keys and other criteria as in the existing GSM. In order to transmit and receive GPRS-data, MS shall activate the packet data address which it wants to use. This results in that MS will be known in the belonging GGSN and co-operation with external data networks can start.
User data are transferred transparently between MS and external data networks by a method known as "encapsulation" and "tunnelling": the data packets are equipped with GPRS-specific protocol information and are transferred between MS and GGSN.

When the mobile GPRS-node has a static IP-address which belongs to the address space in GGSN in Sweden and at the moment is in an Intra-backbone in Germany, the following will happen at communication between transmitting computer and mobile GPRS-node.
IP-packets which are transmitted from a computer in the global Internet in Germany to the static IP-address of the mobile GPRS-node will be routed to the GGSN of the mobile GPRS-node in Sweden and then tunnelled by GTP through GPRS backbone to SGSN in Germany according to the at present established technology.
The dashed line (1) shows the normal route which IP-packets are routed from a transmitting computer in Germany to a mobile GPRS-node in Germany. As will be evident from the Figure, this transport is not very good because the transport distance will be long. This then is an example of the routing path which IP-packets are routed according to the technology of today.
By implementing a function in SGSN which implies that the packets are routed according to a procedure which means that if the SGSN serving the mobile GPRS node decides that IP-packets which it receives are not tunnelled by GTP from an optimal GGSN, an optimal GGSN shall be selected.

Below follows a detailed description of the procedure:
1. In SGSN there is a list over which GGSNs that are suitable to communicate with. When SGSN receives an IP-packet which is tunnelled by GTP from normal GGSN, SGSN inquires whether there is any optimal GGSN. Selection of optimal GGSN is based on from where the IP-packets are transmitted, i.e. the transmitter address in the head of the IP-packet, and the list over GGSNs which are suitable to communicate with. An optimal GGSN is selected.
2. A message is transmitted to optimal GGSN with the content to create an association between the static IP-address of the mobile GPRS-node and the SGSN serving the mobile GPRS-node. The result will be that IP-packets addressed to the static IP-address of the mobile GPRS-node which are received at optimal GGSN will be tunnelled by GTP to the temporary SGSN.
3. SGSN awaits a confirmation from optimal GGSN that an association is created between the static IP-address of the mobile GPRS-node and the temporary SGSN.
4. Optimal GGSN transmits a confirmation to SGSN that an association is created between the static IP-address of the mobile GPRS-node and the temporary SGSN.
5. SGSN after that transmits a message to the transmitting computer in global Internet with the content that IP-packets addressed to the static IP-address of the mobile GPRS-node shall be encapsulated and tunnelled to the to the IP-address belonging optimal GGSN.
6. IP-packets addressed to the static IP-address of the mobile GPRS-node now will be tunnelled to optimal GGSN where the IP-packet is decapsulated, i.e. IP-packets will regain their original form. After that the IP-packets are tunnelled by GTP to the SGSN serving the mobile GPRS-node.
7. If the mobile GPRS-node changes SGSN while the session is in progress, the association is updated in optimal GGSN with the new SGSN. IP-packets which already have been transmitted to the previous SGSN are transmitted from the old SGSN to the new SGSN.

In the transmitting computer there is support for encapsulation of IP-packets, and support to manage associations between the static IP-address of the mobile GPRS-node and optimal GGSN. In GGSN there is support for decapsulation of IP-packets and support to manage associations between the static IP-address of the mobile GPRS-node and the temporary SGSN.

The association between the normal GGSN and the temporary SGSN is updated all the time to make it possible for other users to start new sessions. If the transmitting computer does not have support for encapsulation of IP-packets, or does not have support to manage associations between the static IP-address of the mobile GPRS-node and optimal GGSN, the normal route always can be used.

The continuous line (2) shows the optimal route which is achieved by use of the procedure according to the invention, at which IP-packets are routed from a transmitting computer in Germany to a mobile GPRS-node in Germany.

The invention is not limited to the above illustrated example, but can be modified within the idea of the invention as it is defined in the claims.

## Claims

1. A method for obtaining a communication route for IP-packets between a transmitting computer and a mobile GPRS-node via Gateway GPRS Support Node, GGSN, in a digital communication network, **characterised in that**
• a Service GPRS Support Node, SGSN, serving the mobile GPRS node is provided with information about which GGSNs are possible to communicate with;
• when the SGSN receives an IP-packet which is tunnelled by GPRS Tunnelling Protocol, GTP, from the standard GGSN, the SGSN inquires for that GGSN which is possible to communicate with and which provides the shortest routing path between the transmitting computer and the mobile GPRS-node;
• the GGSN providing the shortest routing path (2) is selected; and
• IP-packets addressed to the static IP-address of the mobile GPRS-node are routed to the selected GGSN where they are received, and tunnelled by GTP to the SGSN where the mobile GPRS-node at the moment is,
whereby an optimal communication route for IP-packets between the transmitting computer and the mobile GPRS-node via the GGSN is obtained.

2. A method according to claim 1, **characterised in that** said enquiry and said selection are made by means of a device in SGSN which includes a function to route IP-packets.

3. A method according to claim 1 or 2, **characterised in that** the length of the routing path between the transmitting computer and the mobile GPRS-node is based on the transmitter address in the head of the IP-packet, which indicates from where the IP-packets are transmitted, and on the GGSN in question.

4. A method according to any of the claims 1 to 3, **characterised in that** a message is transmitted to the selected GGSN with the content to create an association between the static IP-address of the mobile GPRS-node and the SGSN where the mobile GPRS-node at the moment.

5. A method according to claim 4, **characterised in that** SGSN awaits a confirmation from the selected GGSN that an association is created between the static IP-address of the mobile GPRS-node and the SGSN serving the mobile GPRS node.

6. A method according to claim 5, **characterised in that** the selected GGSN transmits a confirmation to the SGSN that an association is created between the static IP-address of the mobile GPRS-node and the SGSN serving the mobile GPRS node.

7. A method according to patent claim 6, **characterised in that** SGSN transmits a message to the transmitting computer in global Internet with the content that IP-packets addressed to the static IP-address of the mobile GPRS-node shall be encapsulated and tunnelled to the selected GGSN, to which the IP address belongs.

8. A method according to claim 7, **characterised in that** if the mobile GPRS-node changes SGSN during session in progress, the association is updated in the selected GGSN with the new SGSN at which IP-packets which already have been transmitted to the previous SGSN are transmitted from the old SGSN to the new SGSN.

9. A method according to claim 8, **characterised by** providing support in the transmitting computer for the encapsulation of IP-packets, and for managing associations between the static IP-address of the mobile GPRS-node and selected GGSN, and by providing support in GGSN for the decapsulation of IP-packets and for managing associations between the static IP-address of the mobile GPRS-node and the SGSN serving the mobile GPRS node.

## Patentansprüche

1. Verfahren zum Erhalten eines Kommunikationsweges für IP-Pakete zwischen einem sendenden Computer und einem mobilen GPRS-Knoten über Gateway-GPRS-Unterstützungsknoten GGSN in einem digitalen Kommunikationsnetz, **dadurch gekennzeichnet, dass**
- ein Dienst-GPRS-Unterstützungsknoten SGSN, der dem mobilen GPRS-Knoten dient, mit Information darüber versehen wird, mit welchen GGSNs es möglich ist, zu kommunizieren;
- wenn der SGSN ein IP-Paket empfängt, das durch GPRS-Tunnel-Protokoll GTP vom Standard GGSN getunnelt wird, fragt der SGSN an, für welchen GGSN es möglich ist, damit zu kommunizieren, und welcher den kürzesten Leitpfad zwischen dem sendenden Computer und dem mobilen GPRS-Knoten liefert;
- wobei der GGSN, der den kürzesten Leitpfad (2) liefert, gewählt wird; und
- IP-Pakete, die zu der statischen IP-Adresse des mobilen GPRS-Knoten adressiert sind, zu dem ausgewählten GGSN geleitet werden, wo sie empfangen werden, und durch GTP zu dem SGSN getunnelt werden, wo sich der mobile GPRS-Knoten im Moment befindet
wobei ein optimaler Kommunikationsweg für IP-Pakete zwischen dem sendenden Computer und dem mobilen GPRS-Knoten über den GGSN erhalten wird.

2. Verfahren nach Anspruch 1, **dadurch gekennzeichnet, dass** die Anfrage und die Auswahl mit Hilfe einer Einrichtung im SGSN gemacht werden, der eine Funktion einschließt, IP-Pakete zu leiten.

3. Verfahren nach Anspruch 1 oder 2, **dadurch gekennzeichnet, dass** die Länge des Leitpfades zwischen dem sendenden Computer und dem mobilen GPRS-Knoten auf der Senderadresse im Kopf des IP-Paketes beruht, die anzeigt, von wo die IP-Pakete übertragen werden, und auf dem fraglichen GGSN.

4. Verfahren nach einem der Ansprüche 1 bis 3, **dadurch gekennzeichnet, dass** eine Nachricht zum ausgewählten GGSN mit dem Inhalt gesendet wird, eine Verknüpfung zwischen der statischen IP-Adresse des mobilen GPRS-Knoten und dem SGSN zu erzeugen, wo der GPRS-Knoten sich im Moment befindet.

5. Verfahren nach Anspruch 4, **dadurch gekennzeichnet, dass** SGSN auf eine Bestätigung von dem ausgewählten GGSN abwartet, dass eine Verknüpfung zwischen der statischen IP-Adresse des mobilen GPRS-Kncten und dem SGSN geschaffen ist, der dem mobilen GPRS-Knoten dient.

6. Verfahren nach Anspruch 5, **dadurch gekennzeichnet, dass** der ausgewählte GGSN eine Bestätigung zu dem SGSN überträgt, dass eine Verknüpfung zwischen der statischen IP-Adresse des mobilen GPRS-Knoten und dem SGSN geschaffen ist, der dem mobilen GRPS-Knoten dient.

7. Verfahren nach Anspruch 6, **dadurch gekennzeichnet, dass** SGSN eine Nachricht zum sendenden Computer im globalen Internet mit dem Inhalt sendet, dass IP-Pakete, die zu der statischen IP-Adresse des mobilen GPRS-Knoten adressiert sind, eingekapselt und zu dem ausgewählten GGSN getunnelt werden sollen, zu dem die IP-Adresse gehört.

8. Verfahren nach Anspruch 7, **dadurch gekennzeichnet, dass**, wenn der mobile GPRS-Knoten SGSN während einer laufenden Sitzung ändert, die Verknüpfung in dem ausgewählten GGSN mit dem neuen SGSN aktualisiert wird, wobei IP-Pakete, die schon zum vorhergehenden SGSN gesendet worden sind, von dem alten SGSN zum neuen SGSN übertragen werden.

9. Verfahren nach Anspruch 8, **dadurch gekennzeichnet, dass** im sendenden Computer Unterstützung für die Einkapselung von IP-Paketen und zum Verwalten von Verknüpfungen zwischen der statischen IP-Adresse des mobilen GPRS-Knotens und ausgewähltem GGSN geschaffen wird, und dass in GGSN Unterstützung für die Entkapselung von IP-Paketen und zum Verwalten von Verknüpfungen zwischen der statischen IP-Adresse des mobilen GPRS-Knoten und dem SGSN, der dem mobilen GPRS dient, geschaffen wird.

## Revendications

1. Procédé d'obtention d'une voie de communication pour des paquets IP entre un ordinateur émetteur et un mobile à noeud GPRS via un noeud de support GPRS de transit, GGSN, dans un réseau de communication numérique, **caractérisé en ce que**
un noeud de support GPRS de service, SGSN, desservant le mobile à noeud GPRS, obtient des informations indiquant avec quels GGSN il est possible de communiquer ;
lorsque le SGSN reçoit un paquet IP qui est tunnelisé par le protocole de tunnelisation GPRS, GTP, depuis le GGSN standard, le SGSN recherche le GGSN avec lequel il est possible de communiquer et qui fournit le chemin d'acheminement le plus court entre l'ordinateur émetteur et le mobile à noeud GPRS ;
le GGSN fournissant le chemin d'acheminement le plus court (2) est sélectionné ; et
les paquets IP adressés à l'adresse IP statique du mobile à noeud GPRS sont acheminés vers le GGSN sélectionné où ils sont reçus, et tunnelisés par le protocole GTP vers le SGSN où se trouve à ce moment le mobile à noeud GPRS,
moyennant quoi on obtient une voie de communication optimale pour les paquets IP entre l'ordinateur émetteur et le mobile à noeud GPRS via le GGSN.

2. Procédé selon la revendication 1, **caractérisé en ce que** ladite recherche et ladite sélection sont effectuées au moyen d'un dispositif dans le SGSN qui comprend une fonction permettant d'acheminer les paquets IP.

3. Procédé selon la revendication 1 ou 2, **caractérisé en ce que** la longueur du chemin d'acheminement entre l'ordinateur émetteur et le mobile à noeud GPRS est basée sur l'adresse de l'émetteur dans l'en-tête du paquet IP, qui indique la provenance des paquets IP transmis, et sur le GGSN en question.

4. Procédé selon l'une quelconque des revendications 1 à 3, **caractérisé en ce qu'**un message est transmis au GGSN sélectionné avec un contenu destiné à créer une association entre l'adresse IP statique du mobile à noeud GPRS et le SGSN où se trouve à ce moment le mobile à noeud GPRS.

5. Procédé selon la revendication 4, **caractérisé en ce que** le SGSN attend une confirmation en provenance du GGSN sélectionné qu'une association est créée entre l'adresse IP statique du mobile à noeud GPRS et le SGSN desservant le mobile à noeud GPRS.

6. Procédé selon la revendication 5, **caractérisé en ce que** le GGSN sélectionné transmet une confirmation au SGSN qu'une association est créée entre l'adresse IP statique du mobile à noeud GPRS et le SGSN desservant le mobile à noeud GPRS.

7. Procédé selon la revendication 6, **caractérisé en ce que** le SGSN transmet un message à l'ordinateur émetteur sur l'Internet global avec un contenu destiné à encapsuler les paquets IP adressés à l'adresse IP statique du mobile à noeud GPRS et à les tunneliser vers le GGSN sélectionné, auquel l'adresse IP appartient.

8. Procédé selon la revendication 7, **caractérisé en ce que** si le mobile à noeud GPRS change de SGSN pendant une session en cours, l'association est mise à jour dans le GGSN sélectionné avec le nouveau SGSN auquel les paquets IP qui ont déjà été transmis au SGSN précédent sont transmis de l'ancien SGSN au nouveau SGSN.

9. Procédé selon la revendication 8, **caractérisé par** la fourniture d'un support dans l'ordinateur émetteur pour l'encapsulation des paquets 12 et pour la gestion des associations entre l'adresse IP statique du mobile à noeud GPRS et le GGSN sélectionné, et par la fourniture d'un support dans le GGSN pour la décapsulation des paquets IP et pour la gestion des associations entre l'adresse IP statique du mobile à noeud GPRS et le SGSN desservant le mobile à noeud GPRS.
